(19) Europäisches Patentamt

European Patent Office

Office européen des brevets

(11) Veröffentlichungsnummer: **0 012 375**
B1

(12) **EUROPÄISCHE PATENTSCHRIFT**

(45) Veröffentlichungstag der Patentschrift: 07.12.83

(51) Int. Cl.³: **G 06 K 19/08, B 42 D 15/02**

(21) Anmeldenummer: **79104965.3**

(22) Anmeldetag: **06.12.79**

(54) Identifikationskarte.

(30) Priorität: 14.12.78 DE 2853953

(43) Veröffentlichungstag der Anmeldung:
25.06.80 Patentblatt 80/13

(45) Bekanntmachung des Hinweises auf die Patenterteilung:
07.12.83 Patentblatt 83/49

(84) Benannte Vertragsstaaten:
BE DE FR GB IT NL

(56) Entgegenhaltungen:
DE - B - 2 639 464
DE - B - 2 657 246
DE - B - 2 734 581
US - A - 4 092 234

NEUES AUS DER TECHNIK, Jahrgang 1978, Nr.
1, Februar 1978 Würzburg "Dokument"

(73) Patentinhaber: HOECHST AKTIENGESELLSCHAFT
Postfach 80 03 20
D-6230 Frankfurt am Main 80 (DE)

(72) Erfinder: Moraw, Roland, Dr.
Buchenweg 4
D-6200 Wiesbaden-Naurod (DE)
Erfinder: von dem Bussche, Götz, Dr.
Steinweg 21
D-6231 Schwalbach (DE)

## Identifikationskarte

Die Erfindung betrifft eine Identifikationskarte aus mehreren Schichten, mit der Identifizierung des Karteninhabers dienenden Informationen an geeigneter Stelle auf einer oder mehreren Schichten und mit zusätzlichen Sicherungsmerkmalen, wie optischen, einander überlagerten Gittern aus Gruppen paralleler Linien.

Derartige Karten in der Form von Personalausweisen, Scheckkarten, Kreditkarten, Paßkarten oder sonstigen Ausweisen bestehen im allgemeinen aus einem mit personenbezogenen Daten versehenen Kartenkern aus Papier oder aus thermoplastischen Folien, z.B. aus Polyvinylchlorid, die schichtweise zu dem Kartenkern zusammengefügt sind. Der Kartenkern wird zum Schutz beim Gebrauch und zur Sicherung gegen Verfälschungen oder unbefugte Veränderungen der Daten durch äußere transparente Folien abgedeckt bzw. kaschiert.

Aus der DE—B—2 639 464 und der US—A—4 092 234 sind Identifikationskarten mit optischen Gittern bekannt, die aus Gruppen paralleler Linien bestehen und einander kreuzweise überlagert sind. Die optischen Gitter unterscheiden sich voneinander im Beugungswinkel und im Azimut und zum Auslesen wird eine Detektoreinrichtung mit Strahlungsempfängern benötigt, die unter den jeweiligen entsprechenden Raumwinkeln angeordnet sein müssen, um die von den Gitterlinien reflektierten Strahlen empfangen zu können. Die optischen Gitter weisen einheitliche Gittertiefe auf, ein Auslesen im Transmissionverfahren ist nicht vorgesehen. Die Rekonstruktion des jeweiligen Informationsinhalts des einzelnen Gitters erfolgt wegen der einheitlichen Gittertiefe einfarbig, eine mehrfarbige Darstellung ist nicht möglich. Die optischen Gitter befinden sich beispielsweise auf einem Kunstoffstreifen, der mit Aluminium beschichtet ist und auf einer Schicht der Karte angeordnet und durch eine Abdeckschicht aus durchsichtigem Kunststoff geschützt ist.

Bekannte Indentifikationskarten werden als verschmolzener Verbund hergestellt, bei dem ein die Informationen tragender Kartenkern durch transparente Folien geschützt wird, die von anderer Beschaffenheit als der Kartenkern sind. So beschreibt die DE—A—23 08 876 eine Identifikationskarte aus relativ dicker Trägerfolie und einer dünnen Klarsichtfolie, zwischen denen sich ein Spezialpapier mit der Fälschungssicherung dienenden Dickenunterschiede des Papiers hervorrufenden Einlagerungen, wie Wasserzeichen, Banknoten-Druck oder dgl. befindet, wobei die drei Schichten so miteinander plastifiziert sind, daß die Einlagerungen durch die Klarsichtfolie hindurch manuell, mechanisch und/oder visuell feststellbar sind. Weitere, der Identifizierung des Karteninhabers dienende Merkmale sind bei dieser bekannten Identifikationskarte an geeigneter Stelle vorgesehen. Beim Plastifizieren wird beispielsweise eine Fotografie in Form eines Filmdiapositivs zwischen dem Spezialpapier und der Trägerfolie eingebracht und fest mit dem Spezialpapier verbunden. Ebenso kann an einer beliebigen Stelle der Vorder- oder Rückseite der Identifikationskarte ein sicherungstechnisch bedruckter Spezialpapierstreifen außen auf dem Plastikmaterial als Feld für nachträgliche Unterschriften oder sonstige handschriftliche Eintragungen aufkaschiert werden.

Bei Identifikationskarten ist vor allem der Kartenkern mit Sicherungsmerkmalen versehen, die eine Fälschung durch Nachahmung verhindern sollen. Es liegt auf der Hand, daß der größte Schutz gegen Fälschungen durch eine Kombination verschiedenartiger Sicherungsmerkmale und durch eine Karte aus einem Verbund von Schichten erzielt wird, die dem Versuch eines Auftrennens in einzelne Schichten und somit Fälschungseingriffen an den auf den Schichten angebrachten Informationen und Sicherungsmerkmalen widerstehen. Hierzu wird in der deutschen Patentanmeldung P 28 38 795.3 vorgeschlagen, daß ein zusammengesetzter Kartenkern und eine obere und untere Abdeckschicht aus thermisch zu einem Verbund verschmelzbaren Polymeren bestehen. Wegen der gleichen Konsistenz aller Schichten des Verbundes ist es nicht möglich, eine derartige Identifikationskarte ohne Zerstörung der auf dem Kartenkern aufgebrachten Sicherungsmerkmale aufzutrennen. Zu solchen Sicherungsmerkmalen gehören Sicherheitsdrucke aus beispielsweise verschlungenen Linienmustern, Wasserzeichen bei Papieren, Fotografien des Karteninhabers u.dgl. mehr. Derartige Sicherungsmerkmale sind, falls es wider Erwarten gelingt, den Kartenverbund ohne Beschädigung der einzelnen Schichten aufzutrennen, technisch einfach zu fälschen bzw. nachzuahmen.

Aufgabe der Erfindung ist es, eine Identifikationskarte zu schaffen, die mit Sicherungsmerkmalen versehen ist, die im Durchlicht farbig rekonstruierbar sind und deren Nachahmung und Fälschung nur mit großem technischem Aufwand und entsprechend schwierig zu handhabenden Spezialtechniken möglich ist.

Diese Aufgabe wird erfindungsgemäß dadurch gelöst, daß in zumindest einer Schicht ein Fenster vorhanden ist, in dem durchleuchtbare Gitterbilder linienförmiger Gitterstruktur, die auf einem Gitterbildträger aufgebracht sind, angeordnet sind, daß die Gitterbilder unterschiedliche Gittertiefen aufweisen und daß in Abhängigkeit von den Gittertiefen beim Auslesen mit Durchlicht jeweils bestimmte, voneinander verschiedene Bildfarben wiedergegeben werden.

In Ausgestaltung der Erfindung sind die Gitterbilder auf einem Gitterbildträger aufgebracht, der in das Fenster eingesetzt ist. Des weiteren ist es auch möglich, daß sich der Gitterbildträger über den Bereich des Fensters hinaus erstreckt.

Die weitere vorteilhafte Ausgestaltung der Erfindung ergibt sich aus den Patentansprüchen 4 bis 14.

Die Erfindung wird im folgenden anhand der Zeichnungen näher erläutert.

Es zeigen:

Fig. 1 eine perspektivische Ansicht einer Identifikationskarte mit Gitterbildern,

Fig. 2 die Rekonstruktion von Gitterbildern einer Identifikationskarte,

Fig. 3 einen Schnitt durch eine Identifikationskarte mit Gitterbildern, die aus Teilbildern zusammengesetzt sind,

Fig. 4 einen Schnitt durch eine Identifikationskarte mit Gitterbildern, die eine Reliefgitterstruktur aufweisen,

Fig. 5 eine Explosions-Schnittdarstellung einer anderen Ausführungsform einer Identifikationskarte, und

Fig. 6a, b in Schnittdarstellungen die Herstellung einer weiteren Ausführungsform einer Identifikationskarte.

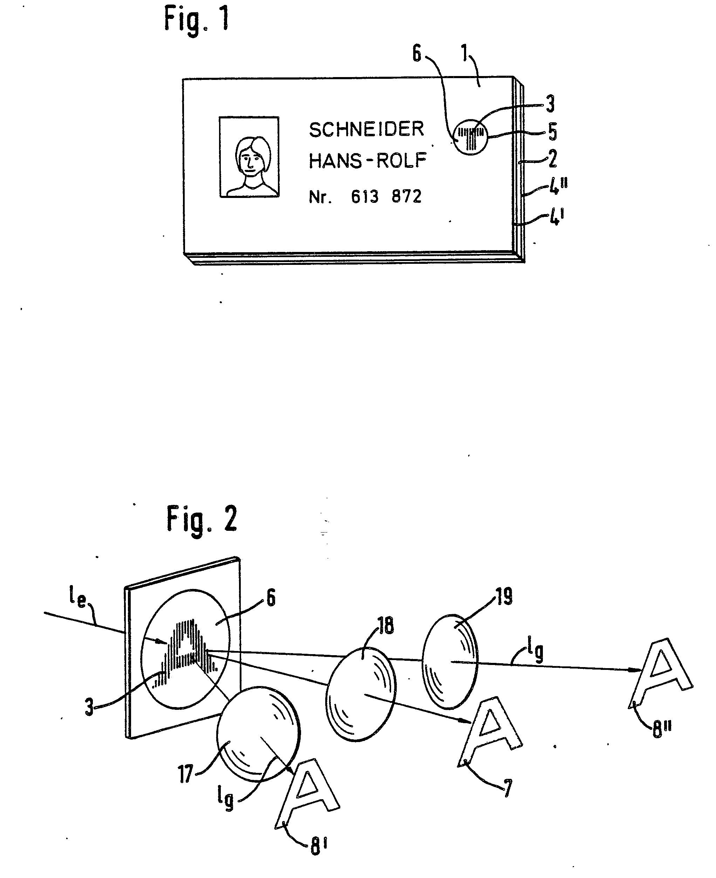

Eine Identifikationskarte 1 ist schematisch in Fig. 1 dargestellt. Die Vorderseite zeigt die Fotografie des Karteninhabers, seinen Zu- und Vornamen sowie eine Kennzahl. Des weiteren kann die Vorderseite der Karte 1 mit der nicht gezeigten Unterschrift des Karteninhabers versehen sein. Die Identifikationskarte 1 besteht aus einem Kartenkern 2, der üblicherweise aus zumindest zwei Schichten zusammengesetzt ist. Im Kartenkern 2 befindet sich ein Fenster 5, in welchem ein oder mehrere Gitterbilder 3 erscheinen. Der Kartenkern 2 ist auf der Vorder- und auf der Rückseite mit Folien 4' bzw. 4'' abgedeckt bzw. kaschiert. Diese Folien dienen zum Schutz beim Gebrauch der Identifikationskarte 1 und zur Sicherung gegen Fälschungen oder unbefugte Veränderungen der Daten. Diese Folien 4', 4'' sind transparent und bestehen im allgemeinen aus den gleichen verschmelzbaren Polymeren, beispielsweise Polyolefinen, Polyamiden, Polyvinylchlorid oder dgl. wie der Kartenkern 2.

Die Gitterbilder 3 sind im Vergleich zu der gesamten Fläche der Vorderseite der Identifikationskarte 1 von kleiner Fläche. Sie enthalten daher in der Regel die Informationen im verkleinerten Maßstab, ähnlich wie dies bei einem konventionellen Mikrofilm der Fall ist. Auch Mikrofilm-Bilder können in der Identifikationskarte 1 als eines der Sicherungsmerkmale eingesetzt werden, wenn sie beispielsweise die Identifikationskarte 1 als verkleinertes Bild oder zusätzliche Informationen oder Daten über den Karteninhaber speichern. Gegenüber den herkömmlichen Mikrofilm-Bildern ergibt der Einsatz von Gitterbildern eine größere Fälschungssicherheit, da die Herstellung von Gitterbildern schwieriger ist als diejenige von Mikrofilm-Bildern. Anstelle von Gitterbildern können auch Hologramme verwendet werden, die auf einem holografischen Film aufgezeichnet werden, aus dem ein Stück in der Größenordnung des Fensters ausgestanzt und in das Fenster eingesetzt wird. Durch entsprechende Führung des Strahlengangs eines Lasers für die Aufzeichnung eines Hologramms ist es möglich, auf das im Fenster eingesetzte holografische Filmstück die Vorderseite der Identifikationskarte 1 holografisch abzubilden. Das auf diese Weise erhaltene Hologramm wird anschließend thermisch entwickelt und durch Kühlen fixiert.

Das für Hologramme wesentliche Merkmal der Informationsspeicherung jedes Bildpunktes auf der gesamten Aufzeichnungsfläche gilt nicht für Gitterbilder. Beispielsweise können Gitterbildaufzeichnungen nicht wie Hologrammaufzeichnungen geteilt werden, da dann im entsprechenden Teilstück der Gitterbildaufzeichnung nur noch ein Teil der ursprünglichen Information enthalten ist.

Die Gitterbilder 3 können durch die optische Abbildung von Gitterstrukturen auf ein auf einem Aufzeichnungsmaterial befindliches Bild erzeugt werden, d.h. indem einem Bild eine Gitterstruktur überlagert wird. Diese Bildaufzeichnungstechnik ist als Trägerfrequenz-Fotografie bekannt und beispielsweise in der Zeitschrift "OPTIK", Band 28, 1968/69, Seiten 263—287 beschrieben.

Zur Bildaufzeichnung sind fotografische Schichten auf Silberhalogenidbasis, aber auch andere lichtempfindliche Schichten wie Fotolacke oder fotoleitende, thermoplastische Schichten geeignet. Diese Aufzählung ist nicht vollständig sondern nur beispielhaft zu verstehen. Es wird unterschieden zwischen Absorptions- und Phasengittern bzw. Absorptions- und Phasenbildern. Die Aufzeichnung erfolgt bei der Trägerfrequenz-Fotografie durch Modulation mit einer Ortsfrequenz, das ist die periodische Dichte- oder Weglängenschwankung innerhalb der fotografischen Schicht infolge der abgebildeten Gitterstruktur, mit der das Bildsignal repräsentierenden örtlichen Dichte- oder optischen Weglängenverteilung. Die bildmäßig modulierte Ortsfrequenz ergibt Dichteunterschiede der Silberkörner in der fotografischen Schicht oder Dichteunterschiede durch Toner bei der Entwicklung der fotoleitenden Schicht. Diese Dichteunterschiede liefern ein Absorptionsgitter, dessen Rekonstruktion durch Beugung an der Orts-Trägerfrequenz erfolgt. Bessere Ergebnisse bei der Rekonstruktion liefern rehalogenierte, beispielsweise rechlorierte Silberbilder als Phasenbilder, bei denen die informationstragende Struktur das optische Weglängen-Bild, welches sich aus dem äußeren Relief der Gelatine und dem inneren Relief der von verschieden hohen Konzentrationen an Silberhalogenid verursachten Brechungsindex-Unterschieden zusammensetzt, ergibt.

Bei gebleichtem Silberfilm erzeugt die Gelatine sowohl periodische Unterschiede im Brechungsindex wie auch periodische Änderungen der Schichtdicke. Ungebleichter Silberfilm ist demnach eine Mischform aus Absorptions- und Phasengittern. Weitgehend reine Phasengitter mit Reliefstrukturen sind die in thermoplastischen fotoleitenden Schichten erzeugten Gitter oder Gitter in Fotolack-Schichten. Die relativ lichtempfindlichen Silberhalogenidschichten sowie die gleichfalls lichtempfindlichen fotoleitenden, ggf. thermoplastischen Schichten, die elektrostatisch aufgeladen, belichtet und entweder mit Toner entwickelt werden oder bis zur Ausbildung eines Reliefbildes erwärmt werden, eignen sich zur Aufzeichnung individueller Gitterbilder, beispielsweise der gesamten Identifikationskarte mit sämtlichen Daten einschließlich einer Fotografie des Karteninhabers. Die weniger lichtempfindlichen Schichten aus Fotolacken, speziell aus positiv arbeitenden Fotolacken mit o-Chinondiazid als lichtempfindliche Substanz, eignen sich insbesondere für die Aufzeichnung von sehr hochwertigen Gitterstrukturen, die eine hohe Liniendichte pro Millimeter besitzen, und damit schwer nachzuahmende Reliefbilder, die allgemeine Sicherungsmerkmale, wie beispielsweise Hoheitszeichen, Codezahlen, Codewörter u.dgl. enthalten, sind.

Diese Reliefgitterbild-Technik hat einen sehr hohen technischen Stand erreicht, der es ermöglicht, Reliefgitter mit bis zu 600 Linien pro Millimeter mit einem vorgebbaren sinusförmigen oder rechtecksförmigen Gitterprofil zu erzeugen. Von diesen Reliefgitterbildern werden Nickelmatrizen angefertigt, mit denen Duplikate durch Prägen thermoplastischer Folien, beispielsweise Polyvinylchlorid-Folien, angefertigt werden. Diese Gitter eignen sich insbesondere zur Herstellung von allgemeinen Sicherungsmerkmalen wie Hoheitszeichen, Wappen, u.dgl., die eventuell durch eine einer größeren Kartenzahl zugeordneten Angabe wie eine Serien-Hauptnummer ergänzt werden. Derartige Gitter sind in der Zeitschrift "OPTICS COMMUNICATIONS", Vol. 18, 1976, Nr. 3, Seiten 292—303 beschrieben.

Die Linienabstände bei der Erzeugung von Gitterbildern sind prinzipiell weder nach großen noch nach kleinen Dimensionen hin begrenzt. Als Gitterbild kann jedoch ein Bild nur dann bezeichnet werden, wenn sich über die Aufzeichnungsfläche hin zumindest eine Gitterperiode erstreckt. Das ist bei Gitterbildern, die durch Lichtreflexion ausgelesen werden, die gesamte Karte, bei Gitterbildern, die mit Durchlicht ausgelesen werden, der Durchmesser der Fensteröffnung. Bevorzugt werden Gitterperioden gewählt, die wesentlich kleiner als der Durchmesser der Karte bzw. der Fensteröffnung sind, um einen deutlichen Beugungseffekt am Gitter zu erhalten. Beispielsweise können die Gitterbilder zehn Linien pro Millimeter bis einige Hundert Linien pro Millimeter enthalten. Dabei treten typische, auf der Beugung beruhende Effekte auf, wie bei den noch später zu beschreibenden Farbgitterbildern mit rechtecksförmigen Querschnitt der Reliefstrukturen, bei denen die Betrachtung mit dem freien Auge schon bei etwa hundert Linien pro Millimeter des Gitterbildes möglich ist, wobei diese Effekte besonders deutlich oberhalb von etwa vierhundert Linien pro Millimeter sind. Solche Linienstrukturen werden durch Kontaktbelichtung, projektive Abbildung oder durch Interferenz von Laserlicht auf der fotografischen Schicht erzeugt.

Die Rekonstruktion des trägerfrequent modulierten Absorptions- oder Phasenbildes erfolgt als Beugungsprozess an der Orts-Trägerfrequenz, wie dies an der prinzipiellen Anordnung in Fig. 2 gezeigt ist. Eingestrahltes Licht $I_e$ wird an der Gitterstruktur A teilweise als gebeugtes Licht $I_g$ abgelenkt, da die Gitterstruktur auch in bildmäßiger Verteilung als Beugungsgitter wirkt. Mit einer schematisch angedeuteten Optik 18 kann das rekonstruierte Bild 7 in Richtung der Achse des eingestrahlten Lichtes $I_e$ abgebildet werden. Des weiteren sind Rekonstruktionen 8', 8" in Richtung der gebeugten Lichstrahlen $I_g$ möglich.

Durch die Vorgabe des Linienabstandes und durch die Vorgabe der Linienorientierung relativ zum Bild ist eine Vielzahl von Ablenkwinkeln einstellbar. Überlagerte Gitterbilder können getrennt mit gebeugtem Licht ausgelesen werden, wenn jedes Bild mit einer eigenen Linienstruktur überlagert wird. Daraus ergibt sich eine große Anzahl von Kombinationsmöglichkeiten von Winkeleinstellungen und Bildüberlagerungen, so daß bereits die Auswahl und Festlegung auf eine oder einige Winkeleinstellungen, eventuell überlagert von Blindeinstellungen, das sind Gitterbilder ohne Informationsinhalt, ein Sicherungsmerkmal darstellt. Die Rekonstruktion muß dann genau unter den festgelegten Winkeln erfolgen, damit durch die entsprechende Beugung am jeweiligen Gitter ein exaktes Auslesen möglich ist.

In "OPTICS COMMUNICATIONS", Vol. 18, 1976, Nr. 3, Seiten 292—303 sind sinusförmige Reliefgitter für schwarz/weiße Projektionsbilder und rechteckige Reliefgitter für farbige Projektionsbilder beschrieben. Durch die Farbe und die damit sich eröffnenden Kombinationsmöglichkeiten wird eine weitere Sicherungsstufe erreicht, da es evident ist, daß die Reliefgittertiefen für bestimmte Farben, die auf wenige Hundertstel $\mu$m genau sein müssen, ohne Kenntnis der für die Erzeugung erforderlichen Technik nicht nachahmbar sind.

Farbige Projektionsbilder können auch durch die Überlagerung der den Farbauszugsbildern entsprechenden Gitterbilder unter verschiedenen Gitterstrukturen und durch Projektion durch entsprechende Filter hindurch, die in den betreffenden Strahlengängen angeordnet sind, erzeugt werden, wie aus der Zeitschrift "OPTIK", 28. Band, 1968/69, Seite 278, hervorgeht. Für die Projektion werden spezielle Schlierenprojektoren benötigt. Bei rechtecksförmigen Reliefgittern bestimmter Relieftiefe werden farbige Projektionsbilder mit normalen Projektionsoptiken abgebildet ("OPTICS COMMUNICATIONS", Vol. 18, 1976, Nr. 3, Seiten 292—303) bzw. werden die farbigen Bilder visuell gesehen, was die Praktikabilität erhöht.

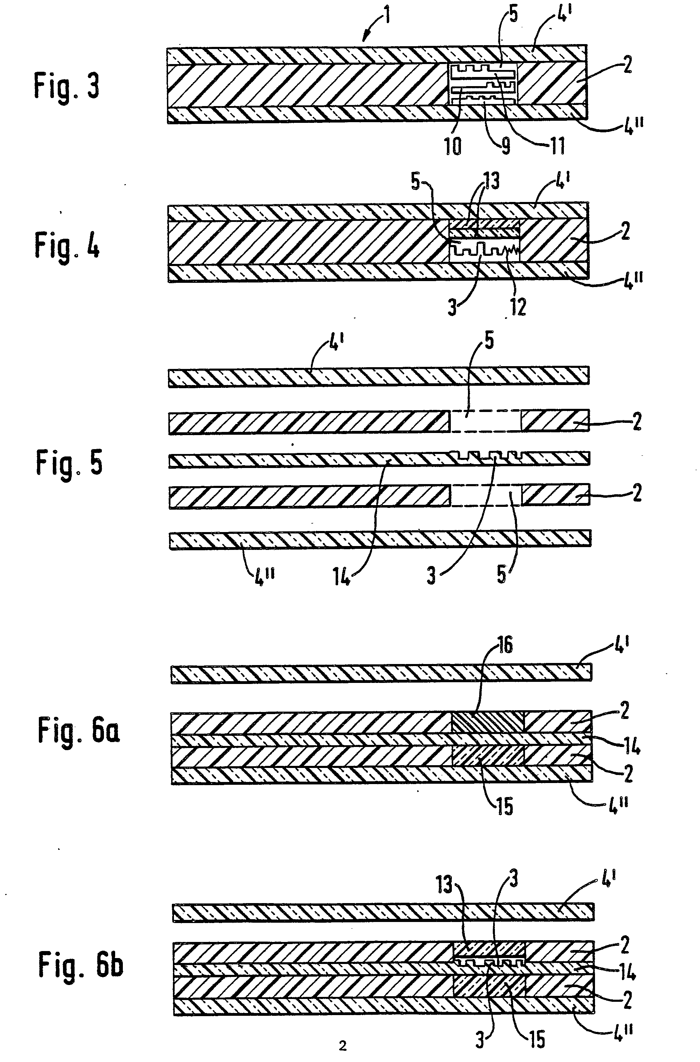

Der Aufbau einer Identifikationskarte 1, deren Rekonstruktion ein mehrfarbiges Bild aus rechtecksförmigen Reliefgittern ergibt, wird anhand von Fig. 3 beschrieben. In dem Fenster 5 des Kartenkerns 2 sind drei Gitterschichten mit drei Farbauszugsbildern einander überlagert.

Diese zusammengesetzten Gitterschichten bestehen aus Teilbildern 9, 10, 11 für Gelb, Magenta bzw. Cyan. Die Vorder- und die Rückseite des Kartenkerns 2 ist jeweils mit einer transparenten Folie 4' bzw. 4" kaschiert. Es ist offensichtlich, daß das paßgerechte Einlegen von drei Gitterschichten bzw. Gitterbildern in die Öffnung des Fensters 5 schwierig ist. Stattdessen kann eine Technik verwendet werden, bei der rechteckige Reliefgitterstrukturen unterschiedlicher Tiefen in einer Ebene verschachtelt erzeugt werden, wie dies beispielsweise in den deutschen Patentanmeldungen P 26 57 246.3, P 27 34 581.9 und P 27 34 580.8 beschrieben ist. Diese Reliefgitterstrukturen in einer Ebene werden vorteilhafterweise durch irreguläre Reliefstrukturen zur Schwarzdarstellung ergänzt, wie dies in der deutschen Patentanmeldung P 25 51 741.5 erläutert wird. Die in Fig. 4 gezeigte Identifikationskarte 1 weist in der Öffnung des Fensters 5 ein Gitterbild 3 mit rechteckigen Reliefgitterstrukturen unterschiedlicher Tiefen auf, das durch irreguläre Reliefgitterstrukturen 12 ergänzt wird. Den Platz oberhalb des Gitterbildes 3 können eine oder mehrere, transparente, nicht kaschierfähige Folieneinlagen 12 einnehmen. In Fig. 4 sind zwei derartige Folieneinlagen 13 eingezeichnet, jedoch ist es ebenso möglich, daß nur eine einzige Folieneinlage 13 oder aber mehr als zwei Folieneinlagen den Fensterbereich oberhalb des Gitterbildes 3 ausfüllen. In eine Identifikationskarte 1 mit einem derartigen Aufbau wurde versuchsweise ein einschichtiges, in der Rekonstruktion mehrfarbiges Gitterbild integriert, das bei der Wiedergabe auf schwarz/rot/goldgelbem Untergrund den schwarzen Bundesadler zeigt. Das rekonstruierte Bild konnte mit einem üblichen Diaprojektor oder einem Mikrofilm-Lesegerät betrachtet werden, es war aber auch möglich, schon bei visueller Betrachtung in etwa senkrecht durchfallendem Licht das Bild zu erkennen. Im Auflicht war weder ein Schwarzweiß-Bild noch ein Farbbild zu sehen. Es ist daher nicht möglich, nur aufgrund des optischen Eindrucks eine Fälschung eines solchen Reliefgitterbildes in der Weise vorzunehmen, daß dieses durch eine Farbfotografie ersetzt wird.

Ein Sicherungszeichen wie ein farbiges Reliefgitterbild muß möglichst so in der betreffenden Identifikationskarte eingebaut werden, daß es nicht leicht aus der Karte herausgenommen und in eine andere Karte eingesetzt werden kann. Ein Schritt in dieser Richtung besteht darin, das Gitterbild nicht in Form eines Plättchens in die Öffnung des Fensters des Kartenkerns einzusetzen, sondern integral in der Identifikationskarte auf einer durchgehenden Kartenschicht, die als Gitterbildträger fungiert, zu erzeugen. Hierzu kann der Kartenkern teilweise mit einer Fotoemulsion, insbesondere im Fensterbereich, beschichtet werden. Ebenso ist es möglich, eine Fotoleiterschicht zur Erzeugung von Tonerbildern oder eine thermoplastische, fotoleitende Aufzeichnungsschicht zur Erzeugung von Reliefbildern aufzubringen. Auch ist es möglich, auf einer Kernfolie oder auf der Innenseite einer der Deckfolien direkt ein Tonerbild durch Übertragung oder elektrografisch über ein mittels Schreibelektroden erzeugtes Ladungsbild hervorzurufen.

Eine weitere Möglichkeit besteht darin, in eine transparente, durchgehende Folie im Fensterbereich ein Gitterbild einzuprägen.

In Fig. 5 ist eine weitere Ausführungsform einer Identifikationskarte 1 dargestellt, bei der der Kartenkern aus zwei mattierten Folien 2 besteht, die einen durchgehenden Gitterbildträger 14 aus einer transparenten Folie einschließen. Auf den Gitterbildträger 14 wurde zuvor das Gitterbild 3 eingeprägt. Versuche haben gezeigt, daß es nahezu unmöglich ist, aus einem derartigen durchgehenden Gitterbildträger 14 das Gitterbild 3 unbeschädigt herauszuschneiden und dieses so in eine andere Karte einzusetzen, daß keine Schnittränder erkennbar sind.

Anhand der Fig. 6a und 6b wird eine Ausführungsform beschrieben, die einen für den Gebrauch besonders stabilen Kartenaufbau besitzt. Die Herstellung dieser Identifikationskarte erfolgt in zwei Stufen. Zuerst wird der doppellagige Kartenkern 2, der bereits die persönlichen Daten des Karteninhabers enthält und den durchgehenden Gitterbildträger 14, eine transparente Zwischenfolie, einschließt, mit der Folie 4" kaschiert. Die untere Kernfolie 2 nimmt im Fensterbereich eine transparente, kaschierfähige Folieneinlage 15 auf. Der Fensterbereich in der oberen Kernfolie 2 wird zunächst offengehalten, beispielsweise durch eine entsprechend geformte Kaschierpresse oder durch eine eingelegte, nicht kaschierfähige Scheibe 16, die in Fig. 6a gezeigt ist. Die Scheibe 16 kann beispielsweise aus einer Polyesterfolie passender Dicke bestehen.

Bei einer Identifikationskarte aus Polyvinylchlorid-Folien erfolgt die Kaschierung bei Temperaturen von 130°C bis 160°C und Drücken von etwa 10 bis 30 bar (ungefähr 10 bis 30 kp/m²) bei Standzeiten von 5 bis 10 Min. Danach wird die Scheibe 16 entfernt und in den freiliegenden Gitterbildträger 14 mit einem etwa auf 140°C erwärmten Prägestempel ein oder mehrere Gitterbilder 3 eingedrückt. Zuletzt wird eine nichtkaschierbare transparente Folieneinlage 13 als Dickenausgleichsscheibe an die Stelle der Scheibe 16 in das Fenster eingesetzt und die obere Folie 4' (Fig. 6b) unter Schonung des innenliegenden Gitterbildes 3 aufkaschiert.

## Patentansprüche

1. Identifikationskarte aus mehreren Schichten, mit der Identifizierung des Karteninhabers dienenden Informationen an geeigneter Stelle auf einer oder mehreren Schichten und mit zusätzlichen Sicherungsmerkmalen, wie optischen, einander überlagerten Gittern aus Gruppen paralleler Linien, dadurch gekennzeichnet, daß in zumindest einer Schicht (2) ein Fenster (5) vorhanden ist, in dem durchleuchtbare Gitterbilder (3) linienförmiger Gitterstruktur, die auf einem Gitterbildträger (6, 14) aufgebracht sind, angeordnet sind, daß die Gitterbilder (3) unterschiedliche Gittertiefen aufweisen und daß in Abhängigkeit von den Gittertiefen beim Auslesen mit Durchlicht jeweils bestimmte, voneinander verschiedene Bildfarben wiedergegeben werden.

2. Identifikationskarte nach Anspruch 1, dadurch gekennzeichnet, daß die Gitterbilder (3) auf einem Gitterbildträger (6) aufgebracht sind, der in das Fenster (5) eingesetzt ist.

3. Identifikationskarte nach Anspruch 1, dadurch gekennzeichnet, daß sich der Gitterbildträger (14) über den Bereich des Fensters (5) hinaus erstreckt.

4. Identifikationskarte nach den Ansprüchen 1 bis 3, dadurch gekennzeichnet, daß der Kartenkern (2) mit transparenten Folien (4', 4") auf beiden Seiten kaschiert ist, die im Bereich des Fensters (5), das sich im Kartenkern (2) befindet, durch kaschierfähige transparente Folieneinlagen (15) verstärkt sind.

5. Identifikationskarte nach den Ansprüchen 1 bis 3, dadurch gekennzeichnet, daß der Fensterbereich oberhalb der Gitterbilder (3) im Kartenkern (2) durch transparente, nicht kaschierfähige Folieneinlagen (13) ausgefüllt ist.

6. Identifikationskarte nach Anspruch 1, dadurch gekennzeichnet, daß das einzelne Gitterbild (3) aus mehreren überlagerten Teilbildern (9, 10, 11) besteht, die jeweils eine bestimmte Bildfarbe beim Auslesen wiedergeben.

7. Identifikationskarte nach Anspruch 6, dadurch gekennzeichnet, daß sich die Gitterstrukturen der Teilbilder (9, 10, 11) in ihren Abmessungen und/oder Orientierungen voneinander unterscheiden.

8. Identifikationskarte nach den Ansprüchen 1 bis 7, dadurch gekennzeichnet, daß die Gitterbilder (3) Absorptionsbilder sind.

9. Identifikationskarte nach den Ansprüchen 1 bis 7, dadurch gekennzeichnet, daß die Gitterbilder (3) Phasenbilder sind.

10. Identifikationskarte nach den Ansprüchen 1 bis 7, dadurch gekennzeichnet, daß die Gitterbilder (3) sowohl Absorptions- als auch Phasenbilder sind.

11. Identifikationskarte nach den Ansprüchen 1 bis 10, dadurch gekennzeichnet, daß die Gitterbilder (3) Gitterstrukturen einer Periodenlänge größer oder gleich dem Fensterdurchmesser enthalten.

12. Identifikationskarte nach den Ansprüchen 1 bis 10, dadurch gekennzeichnet, daß die Periodenlänge der Gitterstrukturen der Gitterbilder (3) kleiner als der Fensterdurchmesser ist.

13. Identifikationskarte nach den Ansprüchen 1 bis 10 und 12, dadurch gekennzeichnet, daß die Gitterstrukturen der Gitterbilder (3) eine Periodenlänge von weniger als 1/400 mm besitzen.

14. Identifikationskarte nach den Ansprüchen 1 bis 7 und 9 bis 12, dadurch gekennzeichnet, daß die als Phasenbilder ausgebildeten Gitterbilder (3) eine Reliefgitterstruktur aufweisen.

## Revendications

1. Carte d'identification composée de plusieurs couches, comportant des informations servant à l'identification du titulaire de la carte, en un emplacement approprié sur une ou plusieurs couches et des signes de sécurité supplémentaires tels que des réseaux optiques, formés de groupes de lignes parallèles, superposés entre eux les uns aux autres, caractérisée en ce que, dans au moins une couche (2), est prévue une fenêtre (5) dans laquelle sont disposées des images réseaux (3), à structure de réseau en forme de lignes, pouvant être éclairées en lumière transmise, qui sont montées sur un support d'images réseaux (6, 14), en ce que les images réseaux (3) présentent des profondeurs de réseaux différentes, et en ce que, en fonction des profondeurs de réseaux, lors de la lecture en lumière transmise, des couleurs d'images déterminées à chaque fois et différentes les unes des autres sont reproduites.

2. Carte d'identification selon la revendication 1, caractérisée en ce que les images réseaux (3) sont prévues sur un support d'images réseaux (6) qui est monté dans la fenêtre (5).

3. Carte d'identification selon la revendication 1, caractérisée en ce que le support d'images réseaux (14) s'étend au-delà de la région de la fenêtre (5).

4. Carte d'identification selon les revendications 1 à 3, caractérisée en ce que le noyau (2) de la carte est recouvert sur ses deux faces avec des feuilles transparentes (4', 4") qui sont renforcées, dans la région de la fenêtre (5) qui se trouve dans le noyau de la carte, par des insertions de feuilles transparentes recouvrantes.

5. Carte d'identification selon les revendications 1 à 3, caractérisée en ce que la région de la fenêtre est remplie, au-dessus des images réseaux (3) ménagées dans le noyau (2) de la carte, par des insertions de feuilles transparentes non recouvrantes (13).

6. Carte d'identification selon la revendication 1, caractérisée en ce que l'image réseau élémentaire (3) est composée de plusieurs images partielles superposées (9, 10, 11) qui reproduisent chacune une couleur d'image déterminée lors de la lecture.

7. Carte d'identification selon la revendication 6, caractérisée en ce que les structures de réseau des images partielles (9, 10, 11) sont différentes l'une de l'autre dans leurs dimensions et/ou leurs orientations.

8. Carte d'identification selon les revendications 1 à 7, caractérisée en ce que les images réseaux (3) sont des images d'absorption.

9. Carte d'identification selon les revendications 1 à 7, caractérisée en ce que les images réseaux (3) sont des images de phase.

10. Carte d'identification selon les revendications 1 à 7, caractérisée en ce que les images réseaux (3) sont aussi bien des images d'absorption que des images de phase.

11. Carte d'identification selon les revendications 1 à 10, caractérisée en ce que les images réseaux (3) contiennent des structures de réseau d'une longueur de période supérieure ou égale au diamètre de la fenêtre.

12. Carte d'identification selon les revendications 1 à 10, caractérisée en ce que la longueur de période des structures de réseau des images réseaux (3) est plus petite que le diamètre de la fenêtre.

13. Carte d'identification selon les revendications 1 à 10 et 12, caractérisée en ce que les structures de réseau des images réseaux (3) ont une longueur de période de moins de 1/400 mm.

14. Carte d'identification selon les revendications 1 à 7 et 9 à 12, caractérisée en ce que les images réseaux (3) constituées par des images de phase présentent une structure de réseau en relief.

**Claims**

1. An identity card, consisting of several layers and carrying, at a suitable point on one or several layers, information which serves to identify the cardholder, and having additional security markings, such as optical, superposed grids comprised of groups of parallel lines, wherein at least in one layer (2) a window (5) is provided in which grid images (3) are located on a grid image support (6, 14), which can be transilluminated and have line-shaped grid structures, wherein the grid images (3) have different grid depths, and wherein, as a function of the individual grid depths, defined, different image colors are reproduced on read-out with transmitted light.

2. An identity card as claimed in claim 1, wherein the grid images (3) are applied to a grid image support (6) which is inserted into the window (5).

3. An identity card as claimed in claim 1, wherein the grid image support (14) extends beyond the zone of the window (5).

4. An identity card as claimed in any of claims 1 to 3, wherein the card core (2) is laminated on both sides with transparent films (4', 4") which, in the zone of the window (5) provided in the card core (2), are reinforced by transparent film inserts (15) capable of lamination.

5. An identity card as claimed in any of claims 1 to 3, wherein the window zone above the grid images (3) in the card core (2) is filled up by transparent film inserts (13) not capable of lamination.

6. An identity card as claimed in claim 1, wherein the individual grid image (3) is formed by several superposed part images (9, 10, 11), each of which reproduces a defined color on read-out.

7. An identity card as claimed in claim 6, wherein the grid structures of the part images (9, 10, 11) differ from one another in their dimensions and/or orientations.

8. An identity card as claimed in any of claims 1 to 7, wherein the grid images (3) are absorption images.

9. An identity card as claimed in any of claims 1 to 7, wherein the grid images (3) are phase images.

10. An identity card as claimed in any of claims 1 to 7, wherein the grid images (3) are both absorption images and phase images.

11. An identity card as claimed in any of claims 1 to 10, wherein the grid images (3) contain grid structures of a period length which is greater than or equal to the diameter of the window.

12. An identity card as claimed in any of claims 1 to 10, wherein the period length of the grid structures of the grid images (3) is smaller than the diameter of the window.

13. An identity card as claimed in any of claims 1 to 10 and 12, wherein the grid structures of the grid images (3) have a period length of less than 1/400 mm.

14. An identity card as claimed in any of claims 1 to 7 and 9 to 12, wherein the grid images (3) formed as phase images have a relief grid structure.

## Fig. 1

## Fig. 2

**Fig. 3**

**Fig. 4**

**Fig. 5**

**Fig. 6a**

**Fig. 6b**